# EUROPEAN PATENT APPLICATION

(11) **EP 1 653 721 A1**
(43) Date of publication of application: **03.05.2006**
(21) Application number: 04292594.1
(22) Date of filing: 02.11.2004
(51) Int. Cl.: H04M 11/06

(54) **Modem with selectable power spectral density masks**

(71) Applicant: ALCATEL, 75008 Paris (FR)
(72) Inventor: Suciu, Radu, 9000 Gent (BE); Van Bruyssel, Danny Edgard Josephine, 9140 Temse (BE)
(74) Representative: Narmon, Gisèle Marie Thérèse

(57) **Abstract**

Network-units (1) comprising modems (2) and agents (5) give their modems (2) a larger freedom by supplying a mask or a set of masks from the agent (5) to the modem (2), which mask or set of masks defines extreme parameter values such as extreme values of power spectral densities, and by letting modem controllers (50) control parameter values such as values of power spectral densities in dependence of the mask or the set of masks. The modems (2) can then efficiently comply with a standard that specifies a set of tests to be passed by the power spectral densities to be transmitted by the modems (2). Modem information such as usable and un-usable tones are supplied from the modems (2) to the agents (5) to let agent controllers (50) control the mask or set of masks in dependence of the modem information. Modem selectors (30) and agent selectors (60) select one or more masks. Modem calculators (31) and agent calculators (61) make calculations.

## Description

The invention relates to a network-unit comprising a modem for exchanging modem signals with an other modem and comprising an agent for supplying agent information to the modem, the agent comprising
- an agent supplier for supplying the agent information;
   the modem comprising
- a modem receiver for receiving the agent information.
   Examples of such a network-unit are access multiplexers, examples of such a modem are digital subscriber line modems.
   A prior art network-unit is known from US 2004/0095921, which discloses a management system (an agent) for managing digital subscriber line modems. The management system supplies agent information to the modems. This agent information defines power spectral densities, which power spectral densities are to be adopted by the modems blindly.
   The known network-unit is disadvantageous, inter alia, owing to the fact that the modems are relatively unable to efficiently comply with a standard that specifies a set of tests to be passed by the power spectral densities to be transmitted by the modems. The modems can only inefficiently comply with this standard by letting the agent define strongly reduced power spectral densities, which result in low bit rates.
   It is an object of the invention, inter alia, to provide a network-unit as defined in the preamble in which the modems are relatively able to efficiently comply with a standard that specifies a set of tests to be passed by the power spectral densities to be transmitted by the modems.
   The network-unit according to the invention is characterized in that the agent information comprises a mask, which mask defines extreme parameter values, the modem further comprising
- a modem controller for controlling parameter values in dependence of the mask, the controlled parameter values being used for the exchanging of the modem signals
   The mask defines extreme parameter values such as minimum parameter values to be exceeded or maximum parameter values not to be exceeded. By providing the modem with the modem controller for controlling the parameter values in dependence of the mask (for optimizing the performance of the modems), such as adapting the parameter values within a range defined by the mask, the modem has a larger freedom and is relatively able to efficiently comply with a standard that specifies a set of tests to be passed by the power spectral densities to be transmitted by the modem. Thereto, the mask has to be compliant with this standard. The network-unit is further advantageous in that it uses its available capacity more efficiently, higher bit rates have become possible.
   The fact that the modem can efficiently comply with a standard that specifies a set of tests to be passed by the power spectral densities to be transmitted by the modem does not limit the invention to this particular standard. The mask or set of masks may be compliant with other standards, such that the modem can efficiently comply with these other standards.
   An embodiment of the network-unit according to the invention is characterized in that the modem further comprises
- a modem supplier for supplying modem information to the agent;
   the agent further comprising
- an agent receiver for receiving the modem information; and
- an agent controller for controlling the mask in dependence of the modem information.
   By providing the agent with the agent controller for controlling the mask in dependence of the modem information, such as adapting the mask in dependence of the modem information, the agent is informed about a modem environment and is able to control the mask in dependence of the modem environment.
   An embodiment of the network-unit according to the invention is characterized in that the agent information comprises a set of masks comprising the mask and a further mask different from the mask, the modem controller comprising
- a modem selector for selecting at least one mask from the set of masks, the modem controller controlling the parameter values in dependence of the selected mask.
   By providing the modem with the modem selector, the modem has even more freedom and is even better able to efficiently comply with a standard that specifies a set of tests to be passed by the power spectral densities to be transmitted by the modem.
   An embodiment of the network-unit according to the invention is characterized in that the modem further comprises
- a modem supplier for supplying modem information to the agent;
   the agent further comprising
- an agent receiver for receiving the modem information; and
- an agent controller for controlling the set of masks in dependence of the modem information.
   By providing the agent with the agent controller for controlling the set of masks in dependence of the modem information, such as adapting the set of masks in dependence of the modem information, the agent is informed about a modem environment and is able to control the set of masks in dependence of the modem environment.
   An embodiment of the network-unit according to the invention is characterized in that the agent controller comprises an agent selector for selecting the set of masks from a larger set of masks in dependence of the modem information.
   By providing the agent with the larger set of masks, such as a pre-calculated set of masks, the agent controller can operate at a higher speed, owing to the fact that at least some of the controlling is done by just selecting a proper set of masks.
   An embodiment of the network-unit according to the invention is characterized in that the modem controller comprises a modem calculator, the controlling of a parameter value comprising the calculating of a parameter value, and a controlled parameter value comprising a calculated parameter value.
   An embodiment of the network-unit according to the invention is characterized in that the agent controller comprises an agent calculator, and the controlling of a mask comprising the calculating of a mask.
   An embodiment of the network-unit according to the invention is characterized in that the modem information comprises usable and un-usable tones, the extreme parameter values comprising power spectral density values.
   The invention also relates to a modem for use in a network-unit comprising the modem for exchanging modem signals with an other modem and comprising an agent for supplying agent information to the modem, the agent comprising
- an agent supplier for supplying the agent information;
   the modem comprising
- a modem receiver for receiving the agent information.
   The modem according to the invention is characterized in that the agent information comprises a mask, which mask defines extreme parameter values, the modem further comprising
- a modem controller for controlling parameter values in dependence of the mask, the controlled parameter values being used for the exchanging of the modem signals.
   The invention yet also relates to an agent for use in a network-unit comprising a modem for exchanging modem signals with an other modem and comprising the agent for supplying agent information to the modem, the agent comprising
- an agent supplier for supplying the agent information;
   the modem comprising
- a modem receiver for receiving the agent information.
   The agent according to the invention is characterized in that the agent information comprises a mask, which mask defines extreme parameter values, the modem further comprising
- a modem controller for controlling parameter values in dependence of the mask, the controlled parameter values being used for the exchanging of the modem signals.
   The invention further relates to a method for exchanging modem signals and comprising the step of
- supplying agent information from an agent to a modem.
   The method according to the invention is characterized in that the agent information comprises a mask, which mask defines extreme parameter values, the method further comprising the step of
- controlling parameter values in dependence of the mask, the controlled parameter values being used for the exchanging of the modem signals.
   The invention yet further relates to a processor program product for exchanging modem signals and comprising the function of
- supplying agent information from an agent to a modem.
   The processor program product according to the invention is characterized in that the agent information comprises a mask, which mask defines extreme parameter values, the processor program product further comprising the function of
- controlling parameter values in dependence of the mask, the controlled parameter values being used for the exchanging of the modem signals.

Embodiments of the modem according to the invention and of the agent according to the invention and of the method according to the invention and of the processor program product according to the invention correspond with the embodiments of the network-unit according to the invention.

The invention is based upon an insight, inter alia, that prior art modems have insufficient freedom to be able to efficiently comply with a standard that specifies a set of tests to be passed by the power spectral densities to be transmitted by the modem, and is based upon a basic idea, inter alia, that modems should get more freedom by providing the modems with modem controllers for controlling parameter values in dependence of masks, which masks are to be supplied to the modems by the agents.

The invention solves the problem, inter alia, to provide a network-unit in which the modems are relatively able to efficiently comply with a standard that specifies a set of tests to be passed by the power spectral densities to be transmitted by the modems, and is advantageous, inter alia, in that it uses its available capacity more efficiently, higher bit rates have become possible.

These and other aspects of the invention will be apparent from and elucidated with reference to the embodiments(s) described hereinafter.
Fig. 1 shows diagrammatically a network-unit according to the invention comprising a modem according to the invention and an agent according to the invention, the modem being coupled to an other modem and to a network;
Fig. 2 shows diagrammatically a network-unit according to the invention comprising three modems according to the invention and an agent according to the invention;
Fig. 3 shows diagrammatically a network-unit according to the invention comprising a modem according to the invention and an agent according to the invention in greater detail;
Fig. 4 shows a mask to be supplied from an agent according to the invention to a modem according to the invention; and
Fig. 5 shows a set of spectrally compatible masks.

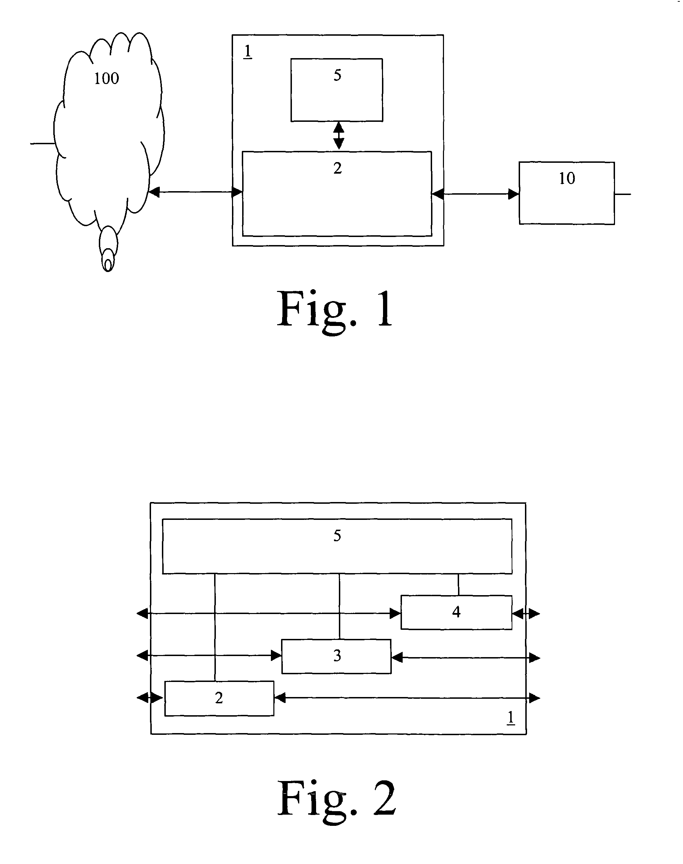

In Fig. 1, a network-unit 1 according to the invention comprising a modem 2 according to the invention and an agent 5 according to the invention are shown. The modem 2 is coupled in a downstream direction to an other modem 10 and in an upstream direction to a network 100.

In Fig. 2, a network-unit 1 according to the invention comprising three modems 2-4 according to the invention and an agent 5 according to the invention are shown.

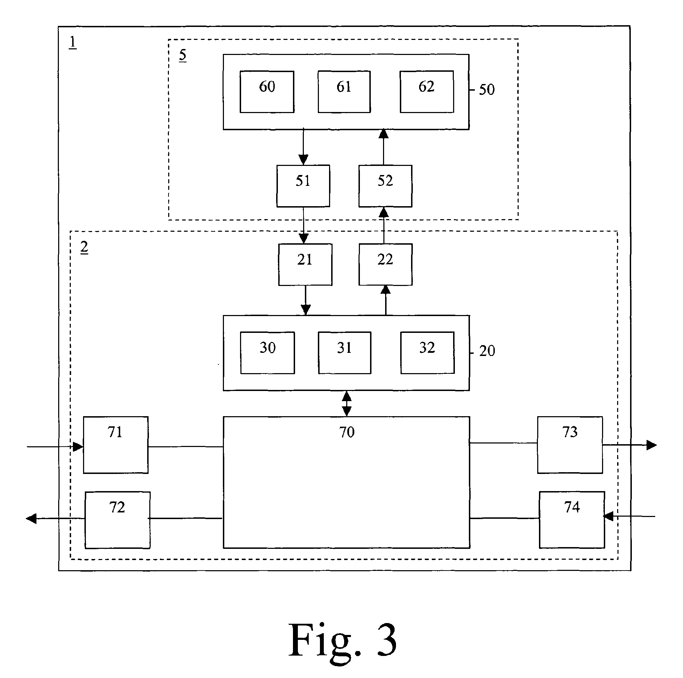

In Fig. 3, a network-unit 1 according to the invention comprising a modem 2 according to the invention and an agent 5 according to the invention are shown in greater detail. The agent 5 comprises an agent controller 50 provided with an agent selector 60, an agent calculator 61 and a processor/memory 62 and coupled to an agent supplier 51 and an agent receiver 52. The modem 2 comprises a modem controller 20 provided with a modem selector 30, a modem calculator 31 and a processor/memory 32. One side of the modem controller 20 is coupled to a modem receiver 21 and to a modem supplier 22, and an other side of the modem controller 20 is coupled to a coupler 70, which is further coupled to, at an upstream side, a receiving network interface 71 and a transmitting network interface 72 and, at a downstream side, a transmitting line interface 73 and a receiving line interface 74. The modem receiver 21 is coupled to the agent supplier 51 and the modem supplier 22 is coupled to the agent receiver 52.

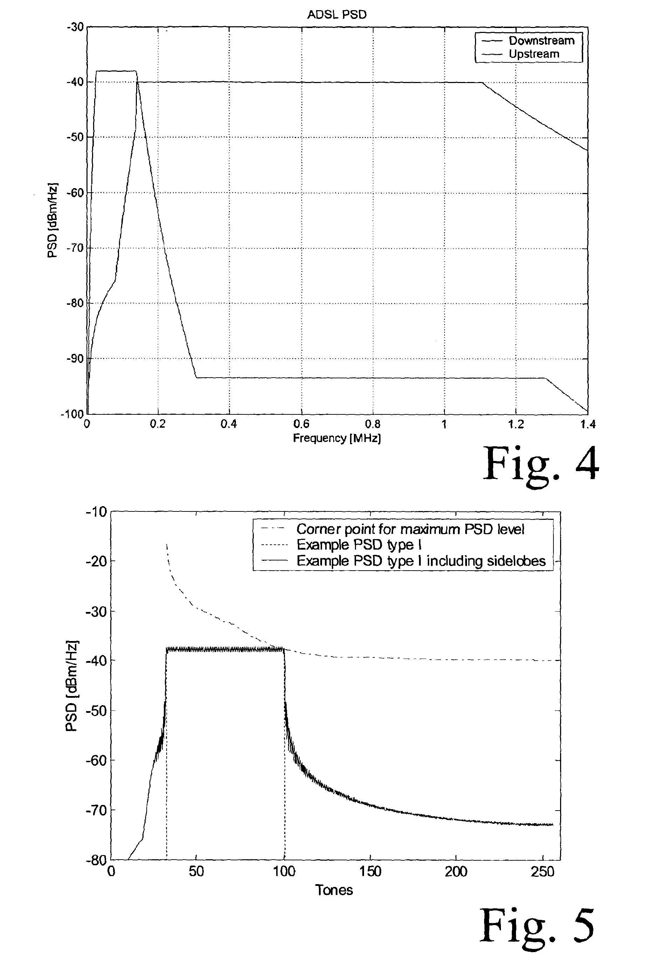

In Fig. 4, a mask to be supplied from an agent 5 according to the invention to a modem 2 according to the invention is shown. This mask comprises an upstream sub-mask defining lower frequencies or tones to be used for the upstream and a downstream sub-mask defining higher frequencies or tones to be used for the downstream. The upstream is a connection from the other modem 10 such as a customer premises equipment to the modem 2, the downstream is a connection from the modem 2 to the other modem 10. Usually, an upstream mask may need to be communicated in a downstream direction from the modem 2 to the other modem 10. Alternatively, the downstream may be a connection from a yet other modem such as a higher network modem not shown to the modem 2, the upstream is a connection from the modem 2 to the yet other modem not shown. Then usually, a downstream mask may need to be communicated in an upstream direction from the modem 2 to the yet other modem not shown. Generally, a mask may comprise one or more upstream sub-masks only, or one or more downstream sub-masks only, or one or more upstream sub-masks and one or more downstream sub-masks.

In Fig. 5, a set of spectrally compatible masks (for example in accordance with T1E1.417 ANSI) is shown disclosing a corner point for a maximum power spectral density level, disclosing a power spectral density type one and disclosing a power spectral density type one including sidelobes.

In a prior art situation as disclosed in US 2004/0095921, a management system (an agent) for managing digital subscriber line modems supplies agent information to the modems. This agent information defines power spectral densities, which power spectral densities are to be adopted by the modems blindly. As a result, the modems are relatively unable to efficiently comply with a standard that specifies a set of tests to be passed by the power spectral densities to be transmitted by the modems (in a downstream direction).

According to the invention, firstly a mask or a set of masks is supplied from the agent 5 via the agent supplier 51 and via the modem receiver 21 to the modem controller 20, which mask or set of masks defines extreme parameter values, such as extreme values of power spectral densities, and secondly the modem controller 20 is arranged to control parameter values such as values of power spectral densities in dependence of the mask or the set of masks. The controlled parameter values are used for (defining) the exchanging of the modem signals between the modem 2 and the other modem 10 (for optimizing the performance of both modems). Other kinds of parameter values are not to be excluded.

As disclosed in Fig. 4, the mask or the set of masks defines extreme parameter values such as minimum parameter values to be exceeded or maximum parameter values not to be exceeded. By arranging the modem controller 20 to control the parameter values in dependence of the mask or the set of masks, such as to adapt the parameter values within a range defined by the mask or the set of masks, the modem 2 has a larger freedom and is relatively able to efficiently comply with a standard that specifies a set of tests to be passed by the power spectral densities to be transmitted by the modem 2. Thereto, the mask or the set of masks has to be compliant with this standard. The network-unit 1 is further advantageous in that it uses its available capacity more efficiently, higher bit rates have become possible. The way the modem controller 20 controls (adapts) parameter values, without a mask or a set of masks defining the borderlines, is common in the art, see for example US 2002/0191684 and US 2003/0063659.

Preferably, modem information such as usable and un-usable tones are supplied from the modem controller 20 via the modem supplier 22 and the agent receiver 52 to the agent controller 50, which modem information is used by the agent controller 50 to control the mask or the set of masks in dependence of the modem information, such as to adapt the mask in dependence of the modem information. As a result, the agent 5 is informed about a modem environment and is able to control the mask in dependence of the modem environment. The way the modem controller 20 detects and generates modem information is common in the art, see for example US 2004/0095921 and US 6,339,613. Other kinds of modem information than usable and un-usable tones are not to be excluded.

In case of a set of masks being supplied from the agent 5 to the modem 2, the modem controller 20 may comprise a modem selector 30 for selecting at least one mask from the set of masks. This increases the freedom of the modem 2. Of course, only the selected mask/masks is/are used for (defining) the exchanging of the modem signals between the modem 2 and the other modem 10, the other masks are to be ignored (for optimizing the performance of both modems). Further, the agent controller 50 may comprise an agent selector 60 for selecting the set of masks from a larger set of masks, such as a pre-calculated set of masks, in dependence of the modem information. This allows the agent controller 50 to be operated at a higher speed, owing to the fact that at least some of the controlling is done by just selecting a proper set of masks. This selecting is done by taking into account the modem environment as defined by the modem information.

The modem controller 20 may further comprise a modem calculator 31, the controlling of a parameter value then comprising the calculating of a parameter value, and a controlled parameter value then comprising a calculated parameter value. The agent controller 50 may further comprise an agent calculator 61, the controlling of a mask then comprising the calculating of a mask.

Generally, each modem 2-4 will supply modem information to the agent 5 and will receive a mask or a set of masks from the agent 5. Alternatively and/or in addition, the agent 5 may supply the mask or the set of masks in dependence of a timing parameter and/or in dependence of overhead information.

Each block shown in Fig. 3 may be hardware, software or a mixture of both. For example the selectors 30,60 and the calculators 31,61 may be realised through software to be run via the processor/memory 32,62. The supplier 22,51 and the receiver 21,52 may be integrated into the controller 20,50. Each pair of supplier and receiver may be combined into one new interface. The controller 20,50 may further be coupled to further equipment not shown for further controlling purposes.

Examples of the network-unit 1 are access multiplexers without excluding other network-units, examples of the modem 2 are digital subscriber line modems without excluding other modems, examples of the agent 5 are management systems, without excluding other agents. The modems 2-4 may be regarded to form a modem pool or a modem system.

The expression "for" in for example "for exchanging", "for supplying", "for controlling" and "for receiving" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of supplying and controlling do not exclude further steps/functions, like for example, inter alia, the steps/functions disclosed for the Fig. 1-5.

## Claims

1. Network-unit (1) comprising a modem (2) for exchanging modem signals with an other modem (10) and comprising an agent (5) for supplying agent information to the modem (2), the agent (5) comprising
- an agent supplier (51) for supplying the agent information;
the modem (2) comprising
- a modem receiver (21) for receiving the agent information;
**characterized in that** the agent information comprises a mask, which mask defines extreme parameter values, the modem (2) further comprising
- a modem controller (20) for controlling parameter values in dependence of the mask, the controlled parameter values being used for the exchanging of the modem signals.

2. Network-unit (1) as defined in claim 1, **characterized in that** the modem (2) further comprises
- a modem supplier (22) for supplying modem information to the agent (5);
the agent (5) further comprising
- an agent receiver (52) for receiving the modem information; and
- an agent controller (50) for controlling the mask in dependence of the modem information.

3. Network-unit (1) as defined in claim 1, **characterized in that** the agent information comprises a set of masks comprising the mask and a further mask different from the mask, the modem controller (20) comprising
- a modem selector (30) for selecting at least one mask from the set of masks, the modem controller (20) controlling the parameter values in dependence of the selected mask.

4. Network-unit (1) as defined in claim 3, **characterized in that** the modem (2) further comprises
- a modem supplier (22) for supplying modem information to the agent;
the agent (5) further comprising
- an agent receiver (52) for receiving the modem information; and
- an agent controller (50) for controlling the set of masks in dependence of the modem information.

5. Network-unit (1) as defined in claim 4, **characterized in that** the agent controller (50) comprises an agent selector (60) for selecting the set of masks from a larger set of masks in dependence of the modem information.

6. Network-unit (1) as defined in any one of claims 1-5, **characterized in that** the modem controller (20) comprises a modem calculator (31), the controlling of a parameter value comprising the calculating of a parameter value, and a controlled parameter value comprising a calculated parameter value.

7. Network-unit (1) as defined in any one of claims 1-5, **characterized in that** the agent controller (50) comprises an agent calculator (61), and the controlling of a mask comprising the calculating of a mask.

8. Network-unit (1) as defined in any one of claims 1-5, **characterized in that** the modem information comprises usable and un-usable tones, the extreme parameter values comprising power spectral density values.

9. Modem (2) for use in a network-unit (1) comprising the modem (2) for exchanging modem signals with an other modem (10) and comprising an agent (5) for supplying agent information to the modem (2), the agent (5) comprising
- an agent supplier (51) for supplying the agent information;
the modem (2) comprising
- a modem receiver (21) for receiving the agent information;
**characterized in that** the agent information comprises a mask, which mask defines extreme parameter values, the modem (2) further comprising
- a modem controller (20) for controlling parameter values in dependence of the mask, the controlled parameter values being used for the exchanging of the modem signals.

10. Agent (5) for use in a network-unit (1) comprising a modem (2) for exchanging modem signals with an other modem (10) and comprising the agent (5) for supplying agent information to the modem (2), the agent (5) comprising
- an agent supplier (51) for supplying the agent information;
the modem (2) comprising
- a modem receiver (21) for receiving the agent information;
**characterized in that** the agent information comprises a mask, which mask defines extreme parameter values, the modem (2) further comprising
- a modem controller (20) for controlling parameter values in dependence of the mask, the controlled parameter values being used for the exchanging of the modem signals.

11. Method for exchanging modem signals and comprising the step of
- supplying agent information from an agent (5) to a modem (2);
**characterized in that** the agent information comprises a mask, which mask defines extreme parameter values, the method further comprising the step of
- controlling parameter values in dependence of the mask, the controlled parameter values being used for the exchanging of the modem signals.

12. Processor program product for exchanging modem signals and comprising the function of
- supplying agent information from an agent (5) to a modem (2);
**characterized in that** the agent information comprises a mask, which mask defines extreme parameter values, the processor program product further comprising the function of
- controlling parameter values in dependence of the mask, the controlled parameter values being used for the exchanging of the modem signals.
